# EUROPEAN PATENT SPECIFICATION

(11) **EP 3 532 278 B1**
(45) Date of publication and mention of the grant of the patent: **02.12.2020**
(21) Application number: 17794869.2
(22) Date of filing: 24.10.2017
(51) Int. Cl.: B31D 5/00

(54) **FILM INFLATION SYSTEM**
FILMINFLATIONSSYSTEM
SYSTÈME DE GONFLAGE DE FILM

(30) Priority: 26.10.2016 US 201662412987 P
(43) Date of publication of application: 04.09.2019
(73) Proprietor: Sealed Air Corporation (US), Charlotte, NC 28208 (US)
(72) Inventor: RAJASEKARAN, Mojan, Bristol, Connecticut 06010 (US); WYSMULLER, John, Wehtersfield, Connecticut 06109 (US); SZYMANSKI, Aaron, Thomaston, Connecticut 06787 (US)
(74) Representative: Uexküll & Stolberg
(86) International application number: PCT/US2017/058023
(87) International publication number: WO 2018/081077

(56) References cited:
- US-A1- 2009 094 939
- US-A1- 2010 200 169
- US-A1- 2010 251 665
- US-A1- 2015 075 114
- US-B2- 8 696 848

## Description

### BACKGROUND

The present disclosure is in the technical field of inflatable film. More particularly, the present disclosure is directed to film inflation systems, including nozzles, sealers, idlers, and end caps for supply rolls of film.

Air cellular cushioning materials are commonly used to protect articles during shipment. One such product is Bubble Wrap® air cellular cushioning sold by Sealed Air Corp. Air cellular cushioning is generally prepared at a production plant and shipped in rolls to distributors and end users. Since the rolls are bulky and have a large volume to weight ratio, shipping costs are relatively high. In addition, the large volume to weight ratio means that relatively large storage areas may be required for storing inventoried cushioning.

To address these issues, inflatable films have been shipped to end users in supply rolls having a relatively low volume to weight ratio. End users are able to inflate the film as needed. It is desirable that end users have access to film inflation systems that inflate and seal such films reliably and consistently to provide desired air cellular cushioning.

US 2010/0200169 A1 discloses a system for inflating a film comprising the features of the preamble of claim 1.

### SUMMARY

A system is usable for inflating a film having two sides that form a common channel and inflatable channels. The inflatable channels are in fluid communication with the common channel. The system includes a roller assembly and a nozzle. The roller assembly is configured to move the film in a longitudinal direction. The nozzle is located upstream of the roller assembly in the longitudinal direction and configured to inflate the inflatable channels. The nozzle includes a proximal end, a distal end, and a slot. The proximal end is configured to separate the two sides of the film to open the common channel as the film moves in the longitudinal direction. The distal end is configured to permit the two sides of the film to converge as the film moves in the longitudinal direction. The slot is configured to direct gas transversely into the common channel to inflate the inflatable channels as the film moves in the longitudinal direction. The roller assembly includes a slotted roller. The slotted roller is configured to accommodate a drag sealer and the drag sealer is configured to form a seal in the film as the film is moved in the longitudinal direction.

In one example, the proximal end is a curved proximal end configured to be arranged upstream in the longitudinal direction. In another example, the distal end is a tapered distal end configured to be arranged downstream in the longitudinal direction. In another example, the slot is a longitudinal slot, and wherein at least a portion of the longitudinal slot is located in the tapered distal end of the nozzle. In another example, the roller assembly includes a first roller and a second roller configured to move the film in the longitudinal direction. In another example, at least a portion of the tapered distal end is configured to be located between the first roller and the second roller.

### BRIEF DESCRIPTION OF THE DRAWING

The foregoing aspects and many of the attendant advantages of the disclosed subject matter will become more readily appreciated as the same become better understood by reference to the following detailed description, when taken in conjunction with the accompanying drawings, wherein:
Figs. 1A to 1D depict perspective views of an embodiment of a film inflation system, in accordance with the embodiments disclosed herein;
Fig. 1E depicts a conceptual block diagram showing relationships between the various components and systems of the film inflation system depicted in Figs. 1A to 1D;
Fig. 2A depicts an example of a drag sealer configured to create a seal in film after the inflatable channels in the film are inflated;
Fig. 2B depicts a partial perspective view of a nozzle and a roller assembly of the film inflation system depicted in Figs. 1A to 1D, in accordance with the embodiments disclosed herein;
Fig. 2C a perspective view of the drag sealer located over a portion of the second roller, in accordance with the embodiments disclosed herein;
Figs. 3A and 3B depict bottom and side views, respectively, of a film being moved by two rollers, inflated by a nozzle, and sealed by a drag sealer, in accordance with the embodiments disclosed herein;
Fig. 4A depicts another embodiment of a nozzle, two rollers, and a drag sealer, in accordance with the embodiments disclosed herein;
Fig. 4B depicts another example of a nozzle that is usable in connection with two rollers and a drag sealer, in accordance with the embodiments disclosed herein;
Fig. 5 depicts an example of a supply roll of film;
Figs. 6A to 6C depict partial cross-sectional views of the supply roll depicted in Fig. 5, with various alignments and misalignments of film with a core of the supply roll;
Figs. 7A and 7B depict examples of end caps that are configured to be aligned with film on a supply roll regardless of the alignment of the film on a core of the supply roll;
Figs. 8A and 8B depict examples of the end caps depicted in Figs. 7A and 7B placed on the supply roll in two instances where the core and the film are misaligned;
Figs. 9A to 9C depict perspective views of another example of an end cap system;
Figs. 10A to 10B depict sides views of an example of an idler configured to provide tension to film being unwound from a supply roll in two different instances;
Figs. 10C and 10D another example of a tensioning system configured to provide tension to film being unwound from a supply roll;

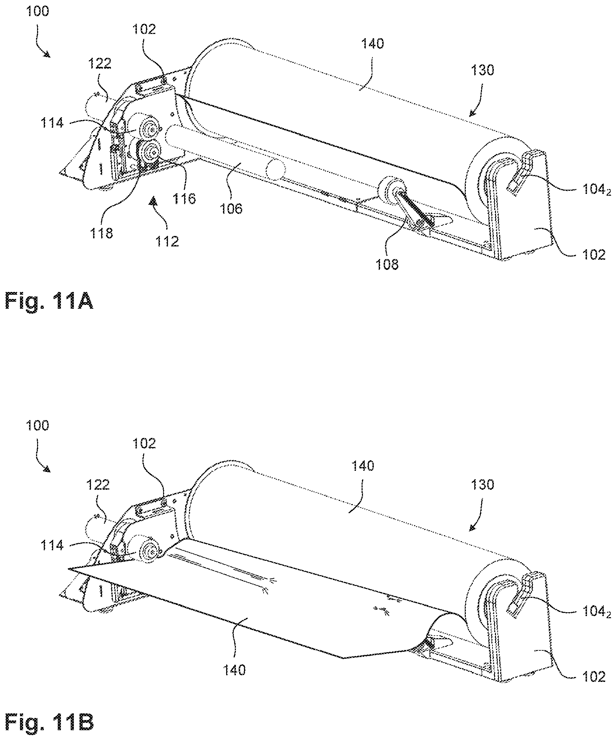

Figs. 11A and 11B depict an example of how the idler in the film inflation system depicted in Figs. 1A to 1D maintain tension in the film;
Figs. 12A to 12F depict various views of one configuration of a film inflation system, in accordance with the embodiments disclosed herein; and
Figs. 13A to 13F depict various views of another configuration of the film inflation system depicted in Figs. 12A to 12F, in accordance with the embodiments disclosed herein.

### DETAILED DESCRIPTION

The present disclosure describes embodiments of film inflation systems for inflating and sealing inflatable film.

Nozzles in film inflation systems inflate inflatable channels in films. Some nozzle designs do not inflate inflatable channels in film properly. In some cases, inconsistent rates of inflation cause air bubbles and air pillows to be unusable in packages. Described herein are nozzles that provide for proper inflation. The nozzle includes a proximal end that separates the two sides of the common film to open the common channel as the film moves in a film path direction, a distal end that permits the two sides of the film to converge as the film moves in the film path direction, and a slot configured to direct gas transversely into the common channel to inflate the inflatable channels as the film moves in the longitudinal direction. In some examples, the proximal end is curved, the distal end is tapered, and the slot is located in the tapered distal end.

Sealers in film inflation systems form seals in film to seal inflatable channels. Some sealer designs do not form proper seals in films. In some cases, sealers form inconsistent seals in inflatable materials. Described herein are sealers that form proper seal in inflatable films. In one example, a sealer has a body with a slot therein and a heating element exposed through a portion of the body. The film is moved be a roller assembly that includes a first roller and a second roller. One of the first and second rollers is a slotted roller and the slot in the body allows portions of the sealer to be located in the slotted roller so that the heating element is located between the first and second rollers. The heating element is capable of being activated to cause a seal to be formed in the film as the film is moved by the first and second rollers.

Some film inflation systems, especially those that pull film from the side of the film, tend to form ripples and folds in the film. In some cases, ripples and folds are formed that prevent inflatable channels from inflating properly. Described herein are idlers that provide tension in the film to reduce the likelihood that ripples or folds form in the film. In one example, an idler includes a bracket fixedly coupled to a housing of a film inflation system that hold a supply roll of the film. An idler arm has a first end and a second end and the first end of the idler arm is rotatably coupled to the bracket. A roller is rotatably coupled to the second end of the idler arm. A biasing mechanism biases the idler in an engaged position. The roller is in contact with the supply roll of film and the biasing mechanism causes the roller to exert a force on the supply roll of film when the idler is in the engaged position. In some examples, the biasing mechanism allows the idler to be toggled between the engaged position and a withdrawn position in which the roller is not in contact with the supply roll.

Film supply rolls provide film inflation systems with film to inflate and seal. In some cases, extensive film path systems move the film and align the film with the inflation and sealing systems. However, such extensive film path systems can be expensive and require an operator to have some skill to initially feed the film through the film path. Simpler film path systems typically do not properly align the film with the inflation and sealing systems, resulting in poor inflation and/or sealing of the film. Described herein are end caps that can be placed on supply rolls of film to properly align the film with a film inflation system. In one example, an end cap includes an insert that is placed inside of the core of the supply roll, a recessed portion coupled to the insert, and a flange that is coupled to the recessed portion and that contacts the film on the supply roll. The end cap also includes a coupling mechanism on a side of the end cap opposite the supply roll. The coupling mechanism is in a fixed position with respect to the flange and the coupling mechanism engages a coupling on the film inflation system. The recessed portion accommodates any portion of the core that extends beyond the film on the supply roll when the film is in contact with the flange.

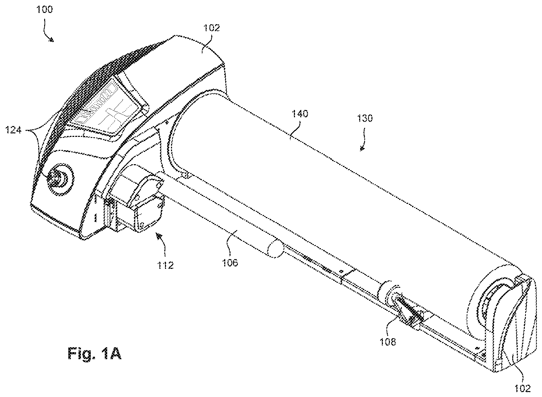

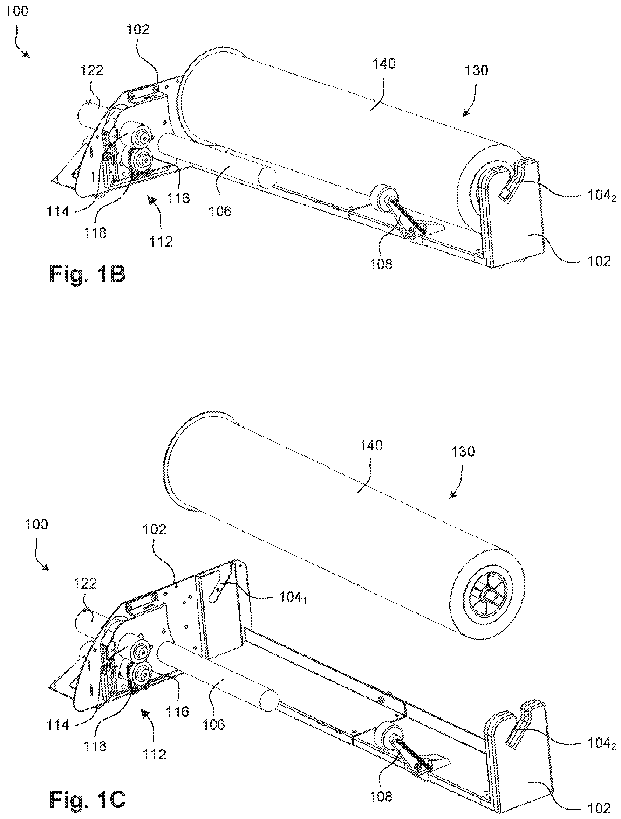

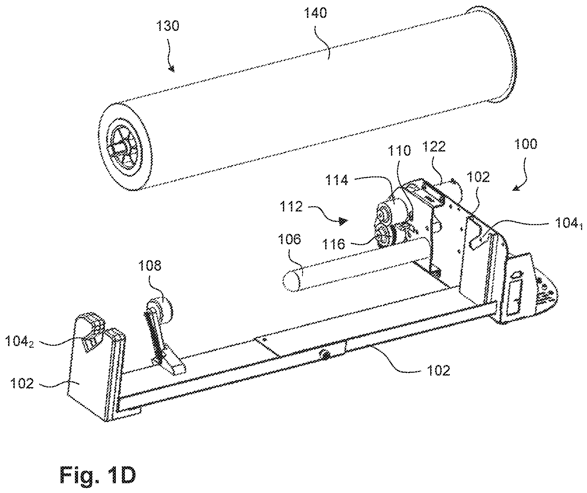

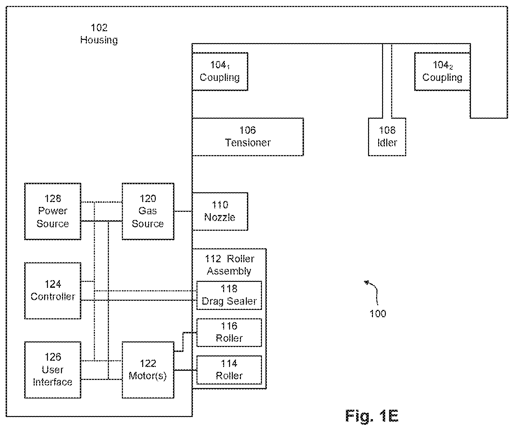

Described below are variations of the embodiments of nozzles, sealers, idlers, and end caps mentioned above. Those components are described below in the context of film inflation systems. Also described below are additional components of film supply systems. Figs. 1A to 1D depict perspective views of an embodiment of a film inflation system 100. Fig. 1E depicts a conceptual block diagram showing relationships between the various components and systems of the film inflation system 100. In the depicted embodiment, the film inflation system 100 includes a housing 102 configured to house and/or be coupled to components and systems of the film inflation system 100. In someexamples, the housing 102 is made from rigid materials, such as aluminum, other metals, thermoset plastics, rigid thermoplastic materials, and the like. In some examples, the housing 102 is of a size and shape that permits the film inflation system 100 to be used when placed on a desk top, placed on a table top, mounted on a wall, or in any other consumer environment. In someexamples, the housing 102 includes exterior structure configured to provide the exterior of the film inflation system 100 and/or interior structure configured to provide support for the exterior structure and for internal components of the film inflation system 100.

The film inflation system 100 includes couplings 104₁ and 104₂ (collectively couplings 104) configured to permit a supply roll 130 of film 140 to be coupled to the film inflation system 100. In some examples, as will be discussed in greater detail below, one or more of the couplings 104 are configured to releasably engage end caps that are placed on ends of the supply roll 130 of film 140. In other examples, the one or more couplings 104 are configured to releasably engage the supply roll 130 of film 140 itself. In the examples depicted in Figs. 1B to 1D, the coupling 104₁ is configured to releasably engage a first coupling mechanism of an end cap (e.g., a groove in a spindle of the end cap) and the coupling 104₂ is configured to receive a second coupling mechanism of the end cap (e.g., a keyed end of the spindle). In the depicted example, the coupling 104₂ is located on a portion of the housing 102 that is adjustable with respect to the portion of the housing 102 where the coupling 104₁ is located. The ability to adjust the distance between the couplings 104₁ and 104₂ allows the film inflation system 100 to accommodate different widths of supply rolls of film.

The film 140 is a two-ply film that has a common channel that is in fluid communication with a number of inflatable channels. The inflatable channels are arranged to be inflated to have a three-dimensional cushion shape. While on the supply roll 130, the inflatable channels are deflated and an edge of the common channel is open. As will be discussed in greater detail below, the film inflation system 100 is configured to move the film 140 along a film path, during which the inflatable channels are inflated through the common channel and the inflatable channels are individually sealed.

In some examples, one or both sides of the film 140 includes at least one or more of polyethylene, ethylene/alpha-olefin copolymer, ethylene/unsaturated ester copolymer, ethylene/unsaturated acid copolymer, polypropylene, propylene/ethylene copolymer, polyethylene terephthalate, polyamide, polyvinylidene chloride, polyacrylonitrile, ethylene/vinyl alcohol (EVOH), or propylene/vinyl alcohol (PVOH). Examples of films are described in US 7 807 253 B1, US 7 507 311 B1, US 7 018 495 B1, US 7 223 461 B1, US 6 982 113 B1, and US 6 800 162B1.

The film inflation system 100 includes a tensioner 106 coupled to the housing 102. The tensioner 106 is located in the film path downstream of the supply roll 130 of film 140. In some examples, the tensioner 106 is configured to direct the film 140 in the film path and to maintain a level of tension in the film as it travels along a portion of the film path. In some embodiments, the tensioner 106 includes one or more protrusions extending from a portion of the housing 102 so that the common channel of the film 140 comes into contact with the tensioner 106.

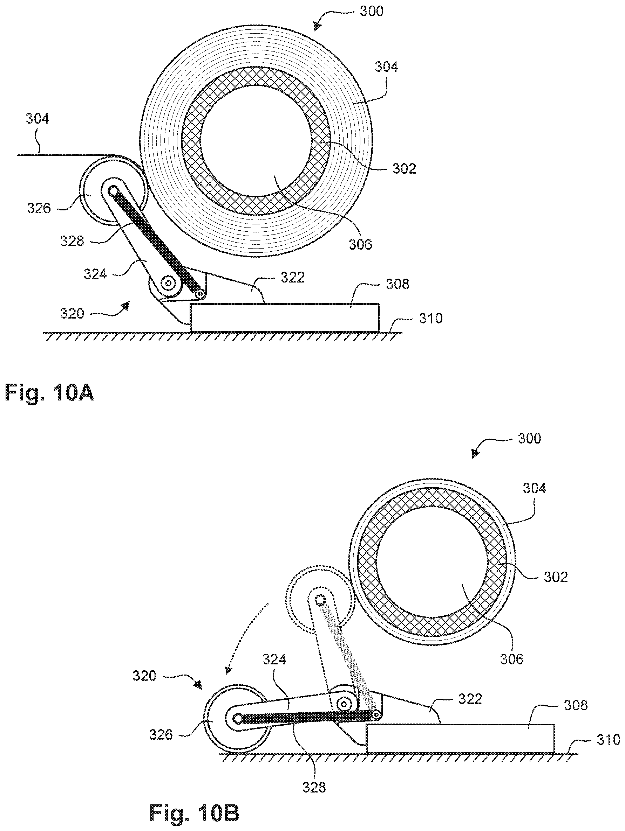

In some examples, the film inflation system 100 also includes an idler 108. As discussed below with respect to the example shown in Figs. 10A to 10B, the idler 108 may be biased in a toggle configuration that toggles between an engaged position where the idler 108 is biased toward the supply roll 130 of film 140 and a withdrawn position where the idler is biased away from the supply roll 130 of film 140. When the idler 108 is biased toward the supply roll 130 of film 140, as shown in Fig. 1B, the idler 108 reduces the possibility of ripples and/or folds forming in the film 140 as the film 140 moves through the film path and as the film 140 shrinks during inflation. In some examples, the vertical and/or horizontal positioning of the idler 108 is selected to provide an amount of tension in the film that reduces the possibility of ripples and/or folds forming during film unwinding and channel inflation.

The film inflation system 100 also includes a nozzle 110. The nozzle 110 is configured to separate two sides of the common channel in the film 140 and to insert gas through the common channel and into the inflatable channels in the film 140. The nozzle 110 has a curved proximal end at the side of the nozzle 110 positioned upstream in the film path, a tapered distal end at the side of the nozzle 110 positioned downstream in the film path, and a longitudinal slot located in the tapered distal end of the nozzle 110. The curved proximal end of the nozzle 110 is configured to separate the two sides of the common channel of the film 140. The tapered distal end of the nozzle 110 is configured to permit the two sides of the film to converge before the film 140 is sealed. The longitudinal slot is configured to direct gas transversely into the inflatable channels of the film 140 as the film 140 moves along the film path.

The film inflation system 100 includes a roller assembly 112. The roller assembly 112 is configured to drive the film 140 along the film path and to seal the inflatable channels of the film 140. In the depicted embodiment, the roller assembly 112 includes a first roller 114 and a second roller 116. The first and second rollers 114 and 116 either abut each other or are positioned in an interference fit so the first and second rollers 114 and 116 are in contact with one another. A side of the film 140 is threaded between the first and second rollers 114 and 116. One or both of the first and second rollers 114 and 116 is driven to pull the film 140 off of the supply roll 130. In some embodiments, the film 140 is pulled by the first and second rollers 114 and 116 at a rate up to a speed in a range between 2.7 and 3.7 m/s (9 and 12 feet per minute). In some embodiments, the first and second rollers 114 and 116 are made from a resilient material, such as a rubber or resilient plastic.

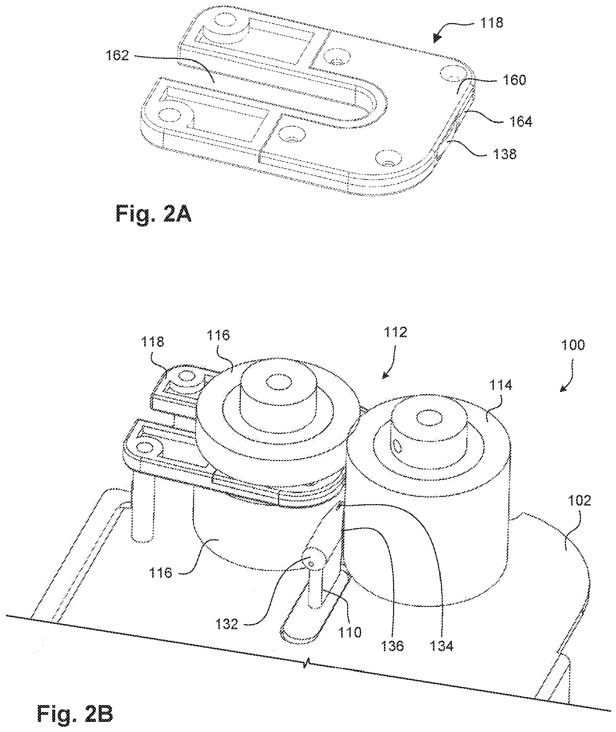

The roller assembly 112 also includes a drag sealer 118. The drag sealer 118 is configured to create a seal in the film 140 after the inflatable channels in the film 140 are inflated. One example of the drag sealer 118 is depicted in Fig. 2A. In that example, the drag sealer includes a body 160 having a U-shape that includes a slot 162. In some examples, the body 160 is made from one or more materials with low thermal conductivity (i.e., less than or equal to about 10 Wm⁻¹K⁻¹ at a temperature of 20°C), such as one or more ceramic materials. The body 160 of the drag sealer 118 has a portion 164 through which a heating element 138 is exposed. In the depicted embodiment, the portion 164 is a flat portion over which the film 140 can move. As the film 140 is moved across the portion 164, the heating element 138 causes the two sides of the film 140 to be sealed to each other. The body 160, including the slot 162, is configured to be placed over a portion of roller with the heating element 138 located substantially tangential to the roller.

The nozzle 110 and the roller assembly 112 of the film inflation system 100 are depicted in greater detail in the partial perspective view shown in Fig. 2B. In the depicted embodiment, the nozzle 110 has a curved proximal end 132 at the side of the nozzle 110 positioned upstream in the film path, a tapered distal end 136 at the side of the nozzle 110 positioned downstream in the film path, and a longitudinal slot 134 located in the tapered distal end 136 of the nozzle 110. The curved proximal end 132 of the nozzle 110 is configured to separate the two sides of the common channel of the film 140. In the depicted embodiment, the curved proximal end 132 has a hemispherical shape with a flat portion near the center of the hemispherical shape. The tapered distal end 136 of the nozzle 110 is configured to permit the two sides of the film 140 to converge before the film 140 is sealed. The longitudinal slot 134 is configured to direct gas transversely into the inflatable channels of the film 140 as the film 140 moves along the film path.

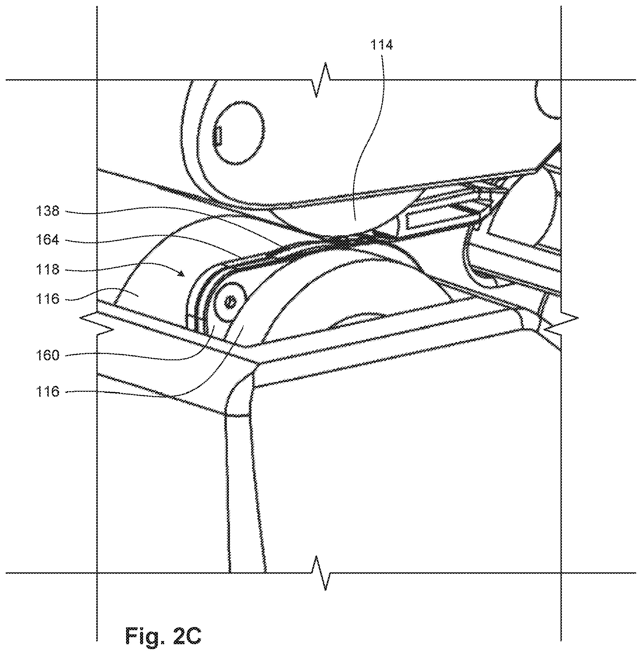

In the embodiment depicted in Fig. 2B, the drag sealer 118 is located over a portion of the second roller 116. The slot 162 in the body 160 is configured to be located around an axle of the second roller 116. The heating element 138 is exposed on the portion 164 of the body 160, which is located between the first and second rollers 114 and 116. The heating element 138 is configured to heat the film 140 as it passes through the first and second rollers 114 and 116 to seal both sides of the film 140 so the individual channels are sealed after they are inflated. The first and second rollers 114 and 116 exert pressure on the film as the heating element 138 heats the film 140. The first and second rollers 114 and 116 are configured to exert pressure on the film 140 as the film 140 is pulled through the first and second rollers 114 and 116. Fig. 2C depicts a perspective view of the drag sealer 118 located over a portion of the second roller 116. As can be seen, the portion of the heating element 138 that is exposed on the portion 164 of the body 160 is arcuate in shape. In some embodiments, such as the one shown in Fig. 2C, the shape of the heating element 138 is based on the shape of the second roller 116. For example, the outer diameter of the heating element is substantially similar to the outer diameter of the second roller 116.

Returning back to Fig. 1A to 1E, the film inflation system 100 also includes a gas source 120. In some embodiments, the gas source 120 includes a gas compressor (e.g., an air compressor) or a container of pressurized gas. In the depicted embodiment, the gas source 120 is located inside the housing 102. In other embodiments, the gas source 120 is located outside of the housing 102. The gas source 120 is in fluid communication with the nozzle 110 and the gas source 120 is configured to supply a flow of gas to the nozzle 110 to inflate the inflatable channels in the film 140.

The film inflation system 100 also includes one or more motors 122 configured to drive one or both of the first and second rollers 114 and 116. In someexamples, the one or more motors 122 includes one motor configured to drive one of the first and second rollers 114 and 116, one motor configured to drive both of the first and second rollers 114 and 116, or two motors each configured to drive one of the first and second rollers 114 and 116. In the depictedexample, the one or more motors 122 are located inside the housing 102. In other embodiments, the one or more motors 122 are located outside of the housing 102. In someexamples, the one or more motors 122 include one or more of an electrical motor, a solenoid, a combustion engine, a pneumatic motor, a hydraulic motor, or any other type of rotary driving mechanism.

The film inflation system 100 also includes a controller 124. In some examples, the controller 124 includes one or more of a complex programmable logic device (CPLD), a microprocessor, a multi-core processor, a co-processing entity, an application-specific instruction-set processor (ASIP), a microcontroller, an integrated circuit, an application specific integrated circuits (ASIC), a field programmable gate array (FPGA), a programmable logic array (PLA), a hardware accelerator, any other circuitry, or any combination thereof. The controller 124 is communicatively coupled to each of the drag sealer 118, the gas source 120, and the one or more motors 122. The controller 124 is configured to control operation of the drag sealer 118, such as whether the drag sealer 118 is heating the heating element and/or the temperature of the heating element of the drag sealer 118. In some embodiments, the controller 124 is configured to receive information back from the drag sealer 118, such as a temperature sensor reading indicating the temperature of the heating element of the drag sealer 118. The controller 124 is configured to control operation of the gas source 120, such as whether the gas source 120 is supplying gas to the nozzle 110 and/or the rate of flow of gas from the gas source 120 to the nozzle 110. The controller 124 is configured to control operation of the one or more motors 122, such as the whether the one or more motors 122 are driving one or both of the rollers 114 and 116 and/or the rate at which the one or more motors 122 are driving one or both of the rollers 114 and 116.

The film inflation system 100 also includes a user interface 126. In some examples, the user interface 126 includes a physical button, a keyboard, a mouse, a touchscreen display, a touch sensitive pad, a motion input device, a movement input device, an audio input, a pointing device input, a joystick input, a keypad input, a peripheral device, an audio output device, a video output, a display device, a motion output device, a movement output device, a printing device, a light (e.g., a light-emitting diode (LED)), any other input or output device, or any combination thereof. The user interface 126 is communicatively coupled to the controller 124. The user interface 126 is configured to receive user inputs, to communicate the user inputs to the controller 124, to receive signals from the controller 124, and to provide an output to the user. In one example, the user interface 126 receives a user input to begin moving and inflating the film, communicates a signal to the controller 124 indicating the user input, receives an indication from the controller 124 that the film inflation system 100 is operating, and illuminates an LED to indicate that the film inflation system 100 is operating. Other functions that can be controlled via the user interface 126 include the flow rate of gas from the gas source 120 to the nozzle 110, the heat produced by the drag sealer 118, the speed at which the one or more motors 122 operate, or any other function of the film inflation system 100.

The film inflation system 100 also includes a power source 128. The power source 128 is coupled to and configured to provide power to each of the drag sealer 118, the gas source 120, the one or more motors 122, the controller 124, and the user interface 126. In some examples, the power source 128 includes a power adapter configured to receive AC power from an external source (e.g., a power outlet, a power supply, etc.) and to convert the AC power into an appropriate level and type of electrical power for each of the drag sealer 118, the gas source 120, the one or more motors 122, the controller 124, and the user interface 126. In other examples, the power source 128 includes one or more batteries (e.g., rechargeable batteries, DC batteries, etc.) configured to provide an appropriate level and type of electrical power for each of the drag sealer 118, the gas source 120, the one or more motors 122, the controller 124, and the user interface 126. In some examples , the controller 124 is configured to control electrical output from the power source 128 to one or more of the drag sealer 118, the gas source 120, the one or more motors 122, the controller 124, and the user interface 126. For example, the controller 124 may be configured to control the one or more motors 122 by controlling an amount of electrical power provided from the power source 128 to each of the one or more motors 122.

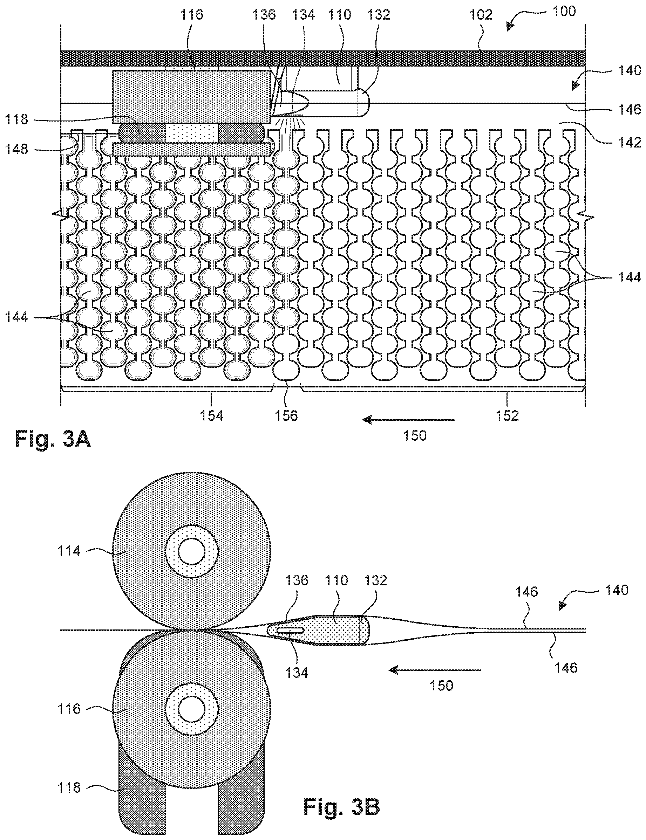

Depicted in Figs. 3A is a bottom view, respectively, of a film 140 being moved by the first and second rollers 114 and 116, inflated by the nozzle 110, and sealed by the drag sealer 118. The film 140 is formed from two layers of film that form a common channel 142 and inflatable channels 144. Depicted in Fig. 3B is a size view of the first and second rollers 114 and 116 and the sealer 118, along with a side view of the path of the edges 146 of the film 140. For ease in viewing, the only portion of the film 140 depicted in Fig. 3B is the edge 146 of the film 140. The common channel 142 is in fluid communication with each of the inflatable channels 144 so that gas directed into the common channel by the nozzle 110 inflates the inflatable channels 144. In some examples, the two layers of the film 140 are formed by folding a single film in half so that the ends of the film opposite the fold form an edge 146 of the common channel 142.

The first and second rollers 114 and 116 are configured to move the film 140 in a direction 150 of a film path. The common channel 142 and the edges 146 of the film pass between the first and second rollers 114 and 116 so that rotation of the first and second rollers 114 and 116 causes the film 140 to move in the direction 150. As the film 140 moves in the direction 150, the longitudinal slot 134 of the nozzle 110 directs gas through the common channel 142 into each of the inflatable channels 144. Then, as the film continues between the first and second rollers 114 and 116, the drag sealer 118 creates a seal 148 in the film 140. The seal 148 individually seals the inflatable channels to maintain the inflatable channels 144 in an inflated state. Thus, the inflatable channels 144 start as deflated inflatable channels 152 on the right side of Fig. 3A, and then become inflated inflatable channels 154 after they are inflated and/or sealed on the left side of Fig. 3A. Fig. 3A also depicts a partially-inflated inflatable channel 156 that is in the midst of being inflated by gas being inserted by the nozzle 110.

Depicted in Fig. 3B is the path of the edges 146 of the two sides of the common channel 142. On the upstream side of the direction 150 (on the right side of Fig. 3B), the edges 146 of the common channel 142 are slightly separated. As the film 140 moves in the direction 150 and it approaches the nozzle 110, the curved proximal end 132 of the nozzle 110 causes the edges 146 to separate to open the common channel 142. As the film 140 continues to move in the direction 150 along the nozzle 110, the body of the nozzle 110 between the curved proximal end 132 and the tapered distal end 136 keeps the edges 146 separate.

As the film 140 continues to move further in the direction 150 along the tapered distal end 136, the tapered distal end 136 permits the edges 146 to come closer to each other. In the depicted embodiment, the longitudinal slot 134 is located in the tapered distal end 136 of the nozzle 110. The location of the longitudinal slot 134 in the tapered distal end 136 allows the inflatable channels 144 of the film 140 to be inflated just before the edges 146 of the film 140 come together and proceed between the first and second rollers 114 and 116. This arrangement allows for gas to remain in the inflatable channels 144 until the inflatable channels 144 are held closed by the first and second rollers 114 and 116 and/or the seal 148 is created by the drag sealer.

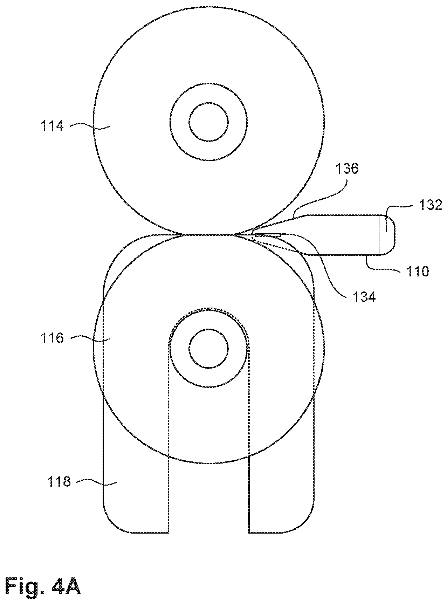

Because the inflatable channels 144 allow gas to exit until they are held closed or sealed, it would be advantageous for the longitudinal slot 134 to be as close as possible to the first and second rollers 114 and 116 and/or the heating element 138 of the drag sealer 118. The location of the nozzle 110 in Figs. 3A and 3B is relatively far from the first and second rollers 114 and 116 and from the drag sealer 118 for ease in viewing. In other embodiments, the nozzle 110 is closer to the first and second rollers 114 and 116 and from the drag sealer 118. Depicted in Fig. 4A is another embodiment of the nozzle 110, the first and second rollers 114 and 116, and the drag sealer 118 with the nozzle 110 at a different location with respect to the first and second rollers 114 and 116 and the drag sealer 118. As shown in Fig. 4A, the tapered distal end 136 is located near the first and second rollers 114 and 116. In the depicted embodiment, the longitudinal slot 134 is located between the first and second rollers 114 and 116 (e.g., the longitudinal slot 134 does not extend horizontally to the right as far as the first and second rollers 114 and 116 extend to the right). In the depicted embodiment, the tapered distal end 136 of the nozzle 110 is located between the first and second rollers 114 and 116 (e.g., the tapered distal end 136 does not extend horizontally to the right as far as the first and second rollers 114 and 116 extend to the right). In the embodiment shown in Fig. 4A, the first and second rollers 114 and 116 are located in interference with each other.

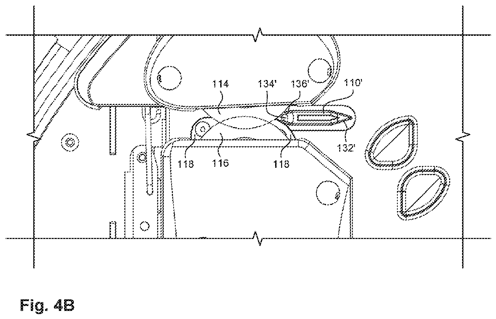

Depicted in Fig. 4B is another embodiment of a nozzle 110' that is usable in connection with the first and second rollers 114 and 116 and the drag sealer 118. The nozzle 110' has a proximal end 132' at the side of the nozzle 110' positioned upstream in the film path, a tapered distal end 136' at the side of the nozzle 110' positioned downstream in the film path, and an outlet 134' located in the tapered distal end 136' of the nozzle 110'. The proximal end 132' of the nozzle 110' is configured to separate the two sides of the common channel of the film. In the depicted embodiment, the proximal end 132' has a wedged shape. The tapered distal end 136' of the nozzle 110' is configured to permit the two sides of the film to converge before the film is sealed. The outlet 134' is configured to direct gas transversely into the inflatable channels of the film as the film moves along the film path.

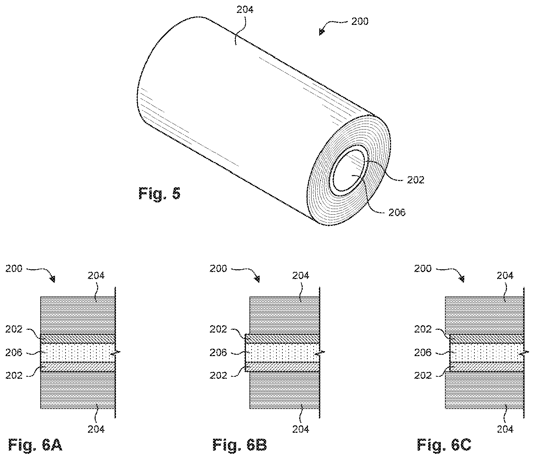

Depicted in Fig. 5 is an examples of a supply roll 200. The supply roll 200 includes a core 202. In some embodiments, the core 202 is made from a paper product (e.g., a cardboard tube, a Kraft paper tube, etc.), a plastic material, or any other material. The supply roll 200 also includes a film 204 wrapped around the core 202. In some examples , the film 204 includes at least one or more of polyethylene, ethylene/alpha-olefin copolymer, ethylene/unsaturated ester copolymer, ethylene/unsaturated acid copolymer, polypropylene, propylene/ethylene copolymer, polyethylene terephthalate, polyamide, polyvinylidene chloride, polyacrylonitrile, EVOH, or PVOH. In the depicted embodiment, the core 202 has a hollow bore 206. In some examples, a material and/or thickness of the core 202 is selected so that the core 202 does not deform from the weight of the film 204, when the core 202 is placed on a spindle, or in other uses of the core 202.

One of the difficulties with supply rolls of film is depicted in Figs. 6A to 6C. Depicted in Figs. 6A to 6C are partial cross-sectional views of the supply roll 200. In the example shown in Fig. 6A, the end of the core 202 is aligned with the end of the film 204. In some instances, such as the instance depicted in Fig. 6B, the end of the core 202 extends out further than the end of the film 204. In other instances, such as the instance depicted in Fig. 6C, the end of the film 204 extends our further than the end of the core 202. While alignment of the core 202 and the film 204 (as depicted in Fig. 6A) may be ideal in certain circumstances, misalignment of the core 202 and the film 204 (as depicted in Figs. 6B and 6C) may be common in most circumstances where aligning the core 202 and the film 204 is not practical.

Misalignment of the core 202 and the film 204 may not allow alignment the end of the film 204 to a surface. In some examples, the hollow bore 206 can be placed over an axle that has a flange on the side. The supply roll 200 can be slid over the axle until a portion of the supply roll 200 contacts the flange. When the core 202 and the film 204 are aligned (e.g., in Fig. 2A), the core 202 and the film 204 will contact the flange. When the core 202 extends out further than the film 204 (e.g., in Fig. 2B), the core 202 will contact the flange but the film 204 will be offset from the flange. When the film 204 extends out further than the core 202 (e.g., in Fig. 2C), the film 204 will contact the flange but the core 202 will be offset from the flange. Thus, the location of the film 204 with respect to the flange varies based on the alignment or misalignment of the film 204 with respect to the core 202.

One difficulty with not being able align the edge of the film 204 with a surface is that the film 204 may not properly feed through a film path when it is misaligned. Using the example of the film inflation system 100, a variation in the horizontal location of the side of the film 140 when the film 140 comes off of the supply roll 130 can cause the roller assembly 112 to improperly engage the film 140. This can result in rippling of the film 140, poor inflation of inflatable channels in the film 140, improper sealing of the inflatable channels in the film 140, and/or other defects.

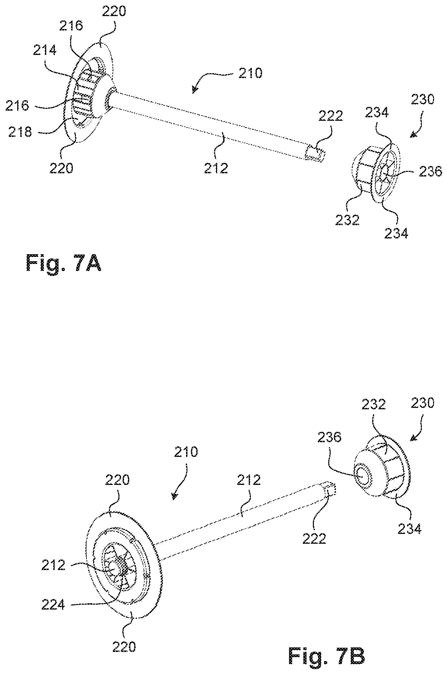

Depicted in Figs. 7A and 7B are an examplesof an end cap 210 that is configured to be aligned to the film 204 on the supply roll 200 regardless of the alignment of the film 204 on the core 202. The end cap 210 includes a spindle 212 configured to be inserted through the hollow bore 206 of the core 202. The end cap 210 also includes an insert 214 that has engagement elements 216. The insert 214 is configured to be inserted into the hollow bore 206 of the core 202 such that the engagement elements 216 engage the inner surface of the hollow bore 206. The end cap 210 has a recessed portion 218 extending from the insert 214 and a flange 220 extending from the recessed portion 218. In the axial direction (i.e., the direction parallel to the axis of the spindle 212), the recessed portion 218 is recessed further away from the insert 214 than the flange 220 is recessed away from the insert 214.

The spindle 212 is configured to be releasably coupled to one or more couplings of a film inflation system. The spindle 212 includes a keyed end 222 opposite the end of the spindle 212 with the flange 220. In some embodiments, the keyed end 222 is configured to engage and be releasably coupled to coupling of a film inflation system. For example, the keyed end 222 depicted in Figs. 7A and 7B is configured to engage and be releasably coupled to the coupling 104₂ of the film inflation system 100. The spindle 212 also includes a coupling mechanism 224 near the end of the spindle 212 on the side of the flange 220 that opposite of the supply roll 200. In some embodiments, the coupling mechanism 224 is configured to engage and be releasably coupled to coupling of a film inflation system. In the example depicted in Figs. 7A and 7B, the coupling mechanism 224 is a groove configured to engage and be releasably coupled to the coupling 104₁ of the film inflation system 100.

Figs. 7A and 7B also depict examples of an end cap 230 that is configured to be used on the supply roll 200 in conjunction with the end cap 210. The end cap 230 includes an insert 232 is configured to be inserted into the hollow bore 206 of the core 202 and engage the inner surface of the hollow bore 206. The end cap 230 also has a flange 234 configured to contact one or more of the core 202 or the film 204. The end cap 230 also has a bore 236 that is configured to receive the spindle 212. The end cap 230 is configured to be placed on an end of the supply roll 200 that is opposite the end of the supply roll 200 where the end cap 210 is placed.

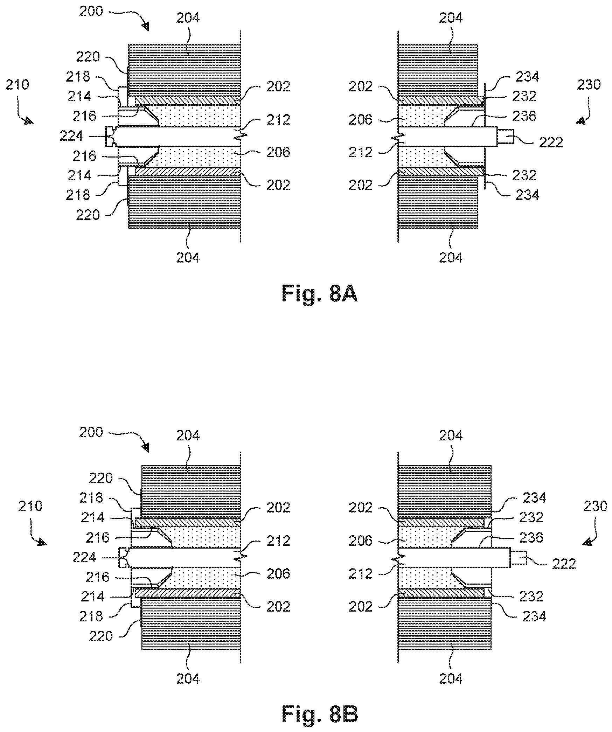

Depicted in Figs. 8A and 8B are examples of the end caps 210 and 230 placed on the supply roll 200 in two instances where the core 202 and the film 204 are misaligned. In both Figs. 8A and 8B, the end cap 210 is coupled to the left side of the supply roll 200 and the end cap 230 is coupled to the right side of the supply roll 200. The insert 214 and the insert 232 are located inside of the hollow bore 206. The spindle 212 of the end cap 210 passes through the bore 236 of the end cap 230. When the coupling mechanism 224 and the keyed end 222 are engaged into couplings (e.g., couplings 104₁ and 104₂), the supply roll 200 is capable of rotating around the spindle 212 to unwind the film 204 from the core 202.

In Fig. 8A, the core 202 and the film 204 are misaligned with the film 204 extending further to the left than the core 202 on the left side of the supply roll 200. In this example, the end cap 210 has been slid to the right until the flange 220 is in contact with the left side of the film 204. The end cap 230 on the right end of the supply roll 200 has been slid to the left until the flange 234 is in contact with the right side of the core 202. In this position, the spindle 212 passes through the bore 236 in the end cap 230 with the keyed end 222 extending out the right of the end cap 230.

In Fig. 8B, the core 202 and the film 204 are misaligned with the core 202 extending further to the left than the film 204 on the left side of the supply roll 200. In this example, the end cap 210 has been slid to the right until the flange 220 is in contact with the left side of the film 204. Even though the core 202 extends to the left of the left side of the film 204, the recessed portion 218 of the end cap 210 is able to accommodate the portion of the core 202 that extends beyond the left side of the film 204. The end cap 230 on the right end of the supply roll 200 has been slid to the left until the flange 234 is in contact with the right side of the film 204. In this position, the spindle 212 passes through the bore 236 in the end cap 230 with the keyed end 222 extending out the right of the end cap 230.

In both of the instances shown in Figs. 8A and 8B, the flange 220 is in contact with the left side of the film 204. Because the flange 220 is in contact with the left side of the film 204 in both instances, the left side of the film 204 is substantially the same distance from the coupling mechanism 224 in the spindle 212. Thus, when the coupling mechanism 224 engages a coupling (e.g., coupling 104₁), the left side of the film 204 is substantially the same distance from the coupling whether the film 204 extends beyond the core 202 (e.g., in Fig. 8A) or vice versa (e.g., in Fig. 8B). While the coupling mechanism 224 is a groove that enables the spindle 212 to be coupled to a coupling, the coupling mechanism 224 may include any other type of coupling mechanism, such as a keyed portion, a slot, a clip, a pin, a bracket, and the like.

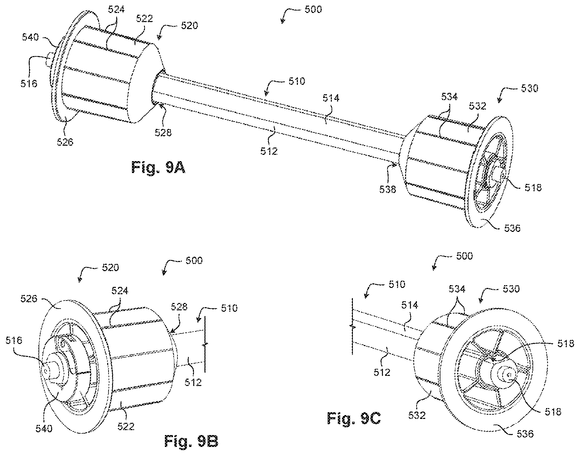

Depicted in Figs. 9A to 9C are perspective views of another example of an end cap system 500. The end cap system 500 includes a spindle 510, a first end cap 520, and a second end cap 530. In the depicted embodiment, the spindle 510 is D-shaped with a cylindrical portion 512 and a planar section 514. As will be described in greater detail below, the D-shape of the spindle 510 deters relative rotation of the spindle 510 with respect to either of the first end caps 520 and 530. This arrangement allows for controlled rolling friction during the unwinding of film from a film core into which the first end caps 520 and 530 have been inserted. The spindle 510 also includes a first engagement member 516 and a second engagement member 518 on opposite ends of the spindle 510. The first and second and second engagement members 516 and 518 are configured to engage corresponding structural elements, such as cradles or bores in a housing (e.g., housing 102) to permit rotational movement of a film roll mounted on the end cap system 500 with respect to the housing.

The first end cap 520 includes a plug 522 that is configured to be inserted in one end of a film roll core. The plug 522 includes ridges 524 that are arranged to be axially aligned with the film roll core when the plug 522 is inserted into the film roll core. The ridges 524 are configured to prevent relative rotation of the film core roll with respect to the first end cap 520. The first end cap 520 also includes a flange 526. When the plug 522 is inserted into the film core roll, one or both of the film and the film roll core contacts the flange 526, depending on whether the film is aligned with the end of the film roll core (see., e.g., Fig. 6A), the film roll core extends beyond the film (see, e.g., Fig. 6B), or the film overhangs the end of the film roll core (see, e.g., Fig. 6C). The first end cap 520 also includes a bore 528 arranged for the spindle 520 to be inserted therethrough. In the depicted example, the bore 528 has a D-shape corresponding to the D-shape of the spindle 520. When the spindle 510 is inserted into the bore 528 of the first end cap 520, the shape of the bore 528 deters relative motion of the spindle 510 with respect to the first end cap 520.

The second end cap 530 includes a plug 532 that is configured to be inserted in another end of the film roll core. The plug 532 includes ridges 534 that are arranged to be axially aligned with the film roll core when the plug 532 is inserted into the film roll core. The ridges 534 are configured to prevent relative rotation of the film core roll with respect to the second end cap 530. The second end cap 530 also includes a flange 536. When the plug 532 is inserted into the film core roll, one or both of the film and the film roll core contacts the flange 536, depending on whether the film is aligned with the end of the film roll core (see., e.g., Fig. 6A), the film roll core extends beyond the film (see, e.g., Fig. 6B), or the film overhangs the end of the film roll core (see, e.g., Fig. 6C). The second end cap 530 also includes a bore 538 arranged for the spindle 510 to be inserted therethrough. In the depicted example, the bore 538 has a D-shape corresponding to the D-shape of the spindle 510. When the spindle 510 is inserted into the bore 538 of the second end cap 530, the shape of the bore 528 deters relative motion of the spindle 510 with respect to the second end cap 530.

The end cap system 500 also includes an adjustable clamp 540. The adjustable clamp 540 is configured to be releasably secured to the spindle 510. The adjustable clamp 540 can be released, moved axially along the spindle 510 to a different location along the spindle, and clamped again to secure the adjustable clamp 540 at a different location along the spindle 510. The adjustable clamp 540 serves as a stop to prevent the first end cap 520 from translating further along the spindle 520 in an axial direction. The ability to move selectively secure the adjustable clamp 540 to the spindle 510 allows the first end cap 520 to be stopped at different locations along the spindle 520. To the extent that the end of film varies with respect to film roll cores (see, e.g., Figs. 6A to 6C), a user can select the location of the adjustable clamp 540 on the spindle 510 so that the edge of the film on the film roll is a predetermined distance from the housing when the end cap system 500 is placed on the housing, regardless of the location of the edge of the film with respect to the film roll core.

While aligning one side of film with the roller and sealer components of a film inflation system increases the ability of the film inflation system to properly inflate and seal film. However, feeding the film from one side of the film also has some disadvantages. In some instances, the pulling the film from one side can cause ripples and/or folds to form in the film as it comes off of a supply roll. Ripples and/or folds can cause inflatable channels in the film to be blocked entirely or partially so that they do not fully inflate. Ripples and/or folds in the film can also cause the film to be misaligned before it reaches the roller and sealer components of the film inflation system, resulting in improper seal location in the film.

Depicted in Figs. 10A and 10B are sides views of an example of an idler 320 configured to provide tension to film 304 being unwound from a supply roll 300 in two different instances. The supply roll 300 includes a core 302 around which the film 304 is wound. The core 302 includes a hollow bore 306. Although not shown in Figs. 10A and 10B, the supply roll 300 is removably coupled to a housing 308 of a film inflation system. In some examples, end caps are placed on the sides of the supply roll 300 and the end caps are configured to engage couplings that are fixedly coupled to the housing 308. The housing 308 is configured to be placed on and/or fixed to a surface 310. In some embodiments, the surface 310 is one of a floor, a desk top, a counter top, a wall, or any other type of surface.

The idler 320 includes a bracket 322 that is configured to be fixedly coupled to the housing 308. In some examples, the bracket 322 is fixedly coupled to the housing 308 by way of one or more fasteners, such as bolts, nuts, screws, rivets, anchors, and the like. In some examples, the bracket 322 is fixedly coupled to the housing 308 by way of something other than a fastener, such as adhesive, welds, and the like. A first end of an idler arm 324 is rotatably coupled to the bracket 322 and a second end of the idler arm 324 is rotatably coupled to a roller 326. The idler arm 324 is configured to be rotated with respect to the bracket 322 about the first end of the idler arm 324. The roller 326 is configured to rotate with respect to the idler arm 324 about the second end of the idler arm 324.

The idler 320 includes a biasing mechanism 328 configured to bias the idler arm 324 toward the supply roll 300. The biasing mechanism 328 causes the roller 326 to be in contact with and apply a force to the film 304 on the supply roll 300. In the embodiment depicted in Figs. 10A and 10B, the biasing mechanism 328 is a tension spring that is coupled to the bracket 322 and to the second end of the idler arm 324. In other examples, the biasing mechanism 328 can be a compression spring, a torsional spring, a flat spring, or any other type of biasing mechanism. In some examples, the biasing mechanism 328 is configured to permit the idler arm 324 to toggle between an engaged position and a withdrawn position, which are described in greater detail below.

In the depiction shown in Fig. 10A, the idler 320 is in an engaged position. In this position, the force of the biasing mechanism 328 causes the roller 326 to be in contact with the film 304 on the supply roll 300. As can be seen in Fig. 10A, the film can be routed over the top of the roller 326 and then to the left of the idler 320. The film can then be pulled by, for example, a roller assembly (e.g., the roller assembly 112 of the film inflation system 100). As the roller assembly pulls the film 304, the biasing mechanism 328 resists any rotation of the idler arm 324 away from the supply roll 300. This resistance by the biasing mechanism 328 results in tension in the film 304 downstream from the idler 320. This tension in the film 304 downstream of the idler 320, along with the position of the idler 320, reduces the possibility of ripples and folds forming in the film 304.

In the depiction shown in Fig. 9B, the idler 320 transitions from the engaged position (depicted in dashed lines) to a withdrawn position (depicted in solid lines). As the film 304 unwinds from the supply roll 300, the outer diameter of the film 304 decreases. As the outer diameter of the film 304 decreases, the biasing mechanism 328 causes the idler arm 324 to rotate so that the roller 326 continues to remain in contact with the film 304. As shown in the dotted lines in Fig. 9B, the idler 320 in the engaged position remains in contact with the film 304 even though the outer diameter of the film is less in Fig. 9B than it is in Fig. 10A.

When the amount of film 304 on the supply roll 300 is low or exhausted, the supply roll 300 may be replaced with another supply roll. It may be advantageous to move the idler 320 to a withdrawn position so that the idler 320 does not interfere with the removal of the supply roll 300 from the housing 308 or the placement of another supply roll on the housing 308. To transition the supply roll 300 from the engaged position to the withdrawn position, a user may rotate the idler 320 in the direction shown by the dashed arrow. In the particular example, the roller 326 is in contact with the surface 310 when the idler 320 is in the withdrawn position. In addition, in the depicted example, the biasing mechanism 328 biases the roller 326 toward the surface 310. In this way, the idler 320 is toggled to be in either the engaged position or the withdrawn position to provide ease of use for a user.

Depicted in Figs. 10A and 10B is an example of how the idler 108 maintains tension in the film 140 in the film inflation system 100. In Fig. 10A, the film 140 is fed from the supply roll 130 over the idler 108 and the tensioner 106. From this point, the film 140 is fed into the first and second rollers 114 and 116. Once the film is fed into the first and second rollers 114 and 116, the first and second rollers 114 and 116 can be driven to further advance the film 140 to the position shown in Fig. 10B. As the film 140 is advanced by the first and second rollers 114 and 116, the idler 108 reduces the possibility of folds or ripples forming in the film 140.

The amount of tension in the film 140 can be affected by a number of characteristics of the idler 108. In some examples, one or more characteristics of the idler 108 are select based on a particular amount of tension in the film 140 during operation of the film inflation system 100. In some examples, the one or more characteristics of the idler 108 include one or more of a transverse location of the idler 108 between the coupling 104₁ and the coupling 104₂, a length of the idler arm of the idler 108, a height of a roller of the idler 108, a dimension of a roller of the idler 108 (e.g., radius, width, etc.), a strength of a biasing mechanism of the idler 108, or any other characteristic of the idler 108.

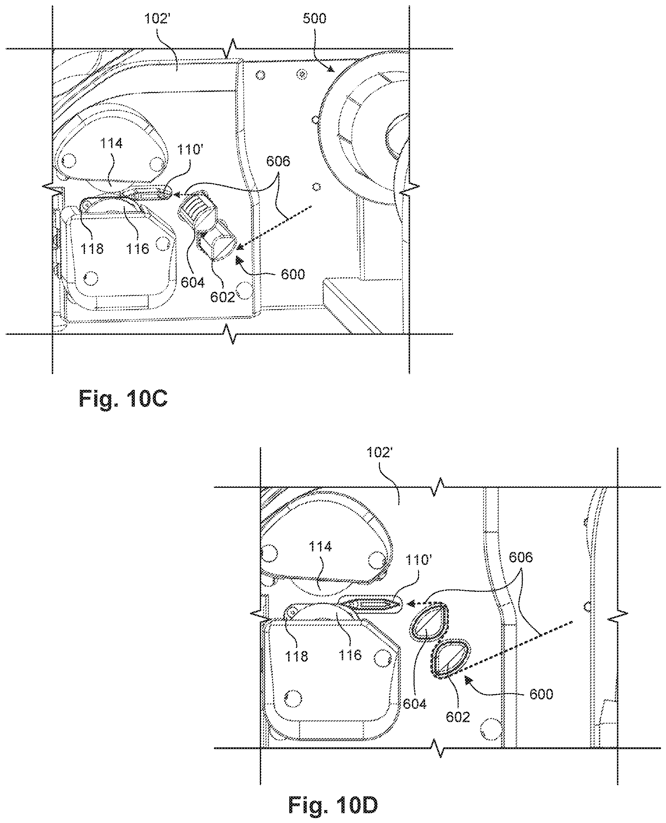

Depicted in Figs. 10C and 10D is another example of a tensioning system 600. The tensioning system 600 includes two tensioner components 602 and 604 that extend from a housing 102'. In some examples, the tensioner components 602and 604 extend from the housing 102' to a distance such that the tensioner components 602 and 604 engage a portion of the transverse width of the film. In some examples, the tensioner components 602 and 604 extend from the housing 102' to a distance such that the tensioner components 602 and 604 engages less than or equal to about one half of the transverse width of the film. In some examples, the tensioner components 602 and 604 extend from the housing 102' to a distance such that the tensioner components 602and 604 engages less than or equal to about one half of the transverse width of the film. In some examples , the tensioner components 602 and 604 extend from the housing 102' to a distance such that the tensioner components 602 and 604 engages less than or equal to about one quarter of the transverse width of the film. In some examples, the tensioner components 602 and 604 extend from the housing 102' to a distance such that the tensioner components 602 and 604 engages less than or equal to about at least one of the following percentages of the transverse width of the film: 90%, 85%, 80%, 75%, 70%, 65%, 60%, 55%, 50%, 45%, 40%, 35%, 30%, 25%, 20%, 15%, or 10%.

An intended film path 606 of the film through the tensioning system 600 is also depicted in Figs. 10C and 10D. As shown in the figures, the film path extends from a film roll mounted on the end cap system 500 under the tensioner component 602. From there, the film path 606 proceeds up the left side of the tensioner component 602 and then between the tensioner components 602 and 604. From there, the film path 606 proceeds up the right side of the tensioner component 604. From there, the film path 606 proceeds around the top of the tensioner component 604 and then is drawn toward the nozzle 110'. In the depictedexample, the tensioner components 602 and 604 are positioned so that a portion of the film path 606 causes the film to move closer to the film roll as the film passes through the tensioner components 602 and 604. In other words, when looking at Fig. 10D, the film moves to the left as it approaches the tensioner component 602, the film moves to the right as it passes through the tensioner components 602 and 604, and film moves to the left again between the tensioner component 604 and the nozzle 110'. The movement of the film to the right when the film path 606 passes between the tensioner components 602 and 604. This movement to the right may provide a particular level of tension in the film for proper inflation by the nozzle 110' and sealing by the drag sealer 118 as the film passes through the rollers 114 and 116. The embodiment of the tension system 600 may be used with or without additional tensioning devices, such as with or without the idler 320.

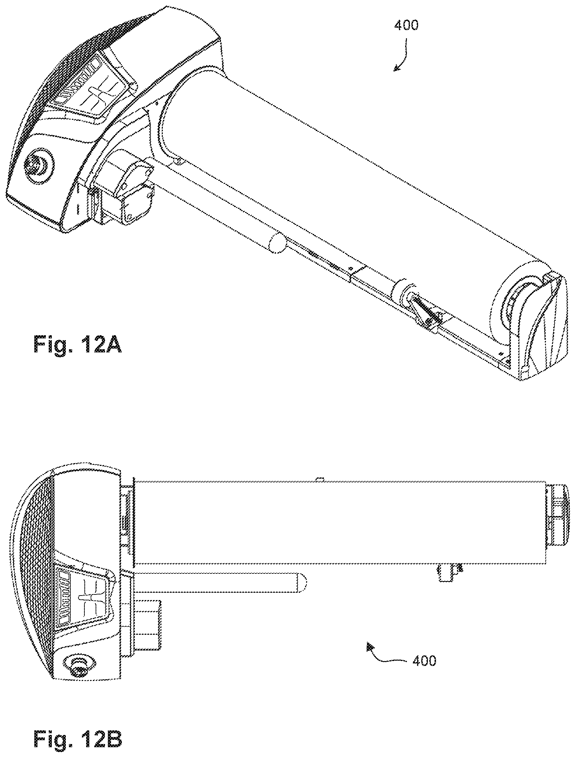

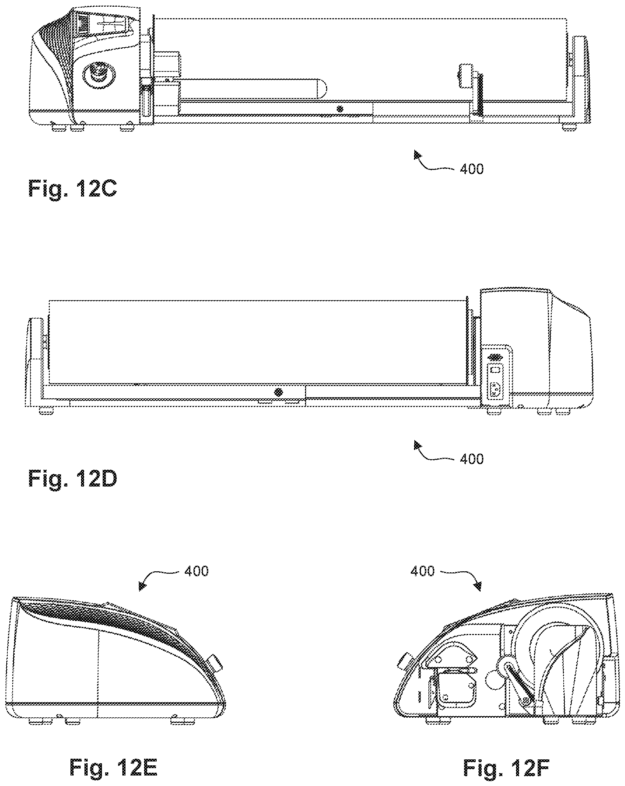

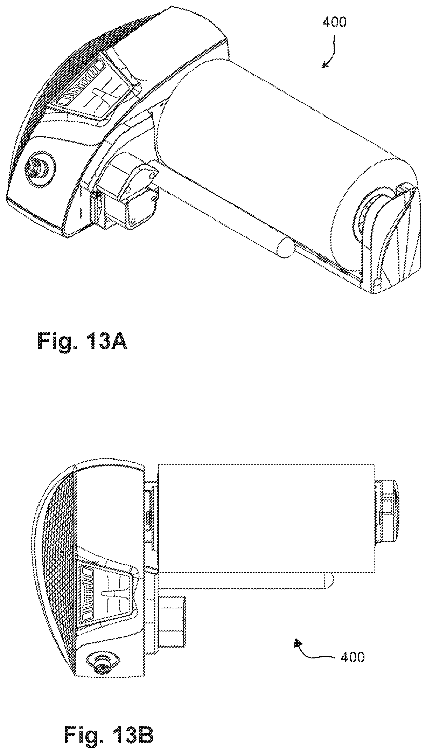

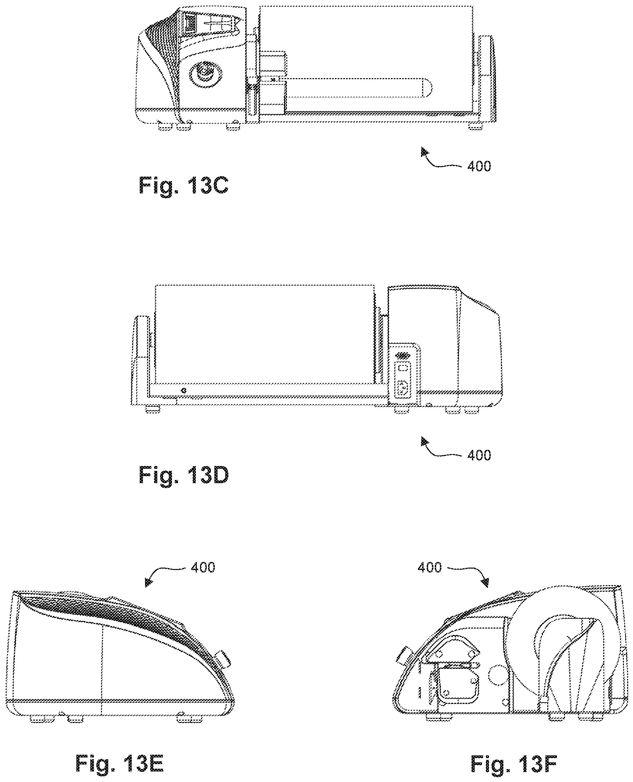

The various embodiments of film inflation systems described herein can have a variety of forms and designs. Depicted in Figs. 12A to 12F are various views of one configuration of a film inflation system 400. In particular, Fig. 12A depicts a perspective view thereof; Fig. 12B depicts a top view thereof; Fig. 12C depicts a front view thereof; Fig. 12D depicts a back view thereof; Fig. 12E depicts a left side view thereof; and Fig. 12F depicts a right side view thereof. Depicted in Figs. 13A to 13F are various views of another configuration of the film inflation system 400. In particular, Fig. 13A depicts a perspective view thereof; Fig. 13B depicts a top view thereof; Fig. 13C depicts a front view thereof; Fig. 13D depicts a back view thereof; Fig. 13E depicts a left side view thereof; and Fig. 13F depicts a right side view thereof.

As can be seen, the film inflation system 400 is configured to transition between two configurations to accommodate different width of supply rolls. In the embodiment shown in Figs. 12A to 12F, the film inflation system 400 is configured to hold a long supply roll of film. In this configuration, the film inflation system also includes an idler to aid a tensioner in maintaining tension in the film as it passes through the film inflation system 400. In the example shown in Figs. 13A to 13F, the film inflation system 400 is configured to hold a short supply roll of film. In this configuration, the idler has been removed. The idler may be removed when there is not sufficient room between the end of the tensioner and the end of the housing or when the tensioner alone provides sufficient tension in the film as it passes through the film inflation system 400. The idler may be placed back on the housing when the film inflation system 400 is transitioned back from the configuration shown in Figs. 13A to 13F to the configuration shown in Figs. 12A to 12F.

For purposes of this disclosure, terminology such as "upper," "lower," "vertical," "horizontal," "inwardly," "outwardly," "inner," "outer," "front," "rear," and the like, should be construed as descriptive and not limiting the scope of the claimed subject matter. Further, the use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Unless stated otherwise, the terms "substantially," "approximately," and the like are used to mean within 5% of a target value.

The principles, representative embodiments, and modes of operation of the present disclosure have been described in the foregoing description. However, aspects of the present disclosure which are intended to be protected are not to be construed as limited to the particular embodiments disclosed. Further, the embodiments described herein are to be regarded as illustrative rather than restrictive. It will be appreciated that variations and changes may be made by others. Accordingly, it is expressly intended that all such variations fall within scope of the presentinvention as defined in the accompanying claims.

## Claims

1. A system for inflating a film (140) having two sides that form a common channel (142) and inflatable channels (144), wherein the inflatable channels (144) are in fluid communication with the common channel (142), the system comprising:
a roller assembly (112) configured to move the film (140) in a longitudinal direction; and
a nozzle (110) located upstream of the roller assembly (112) in the longitudinal direction and configured to inflate the inflatable channels (144), the nozzle (110) comprising:
a proximal end (132) configured to separate the two sides of the film (140) to open the common channel (142) as the film (140) moves in the longitudinal direction;
a distal end (136) configured to permit the two sides of the film (140) to converge as the film (140) moves in the longitudinal direction; and
a slot (134) configured to direct gas transversely into the common channel (142) to inflate the inflatable channels (144) as the film (140) moves in the longitudinal direction; **characterized in that**
the roller assembly (112) includes a slotted roller (116);
the slotted roller (116) is configured to accommodate a drag sealer (118); and
the drag sealer (118) is configured to form a seal (148) in the film (140) as the film (140) is moved in the longitudinal direction.

2. The system of claim 1, wherein the proximal end (132) is a curved proximal end configured to be arranged upstream in the longitudinal direction.

3. The system of claim 1, wherein the distal end (136) is a tapered distal end configured to be arranged downstream in the longitudinal direction.

4. The system of claim 3, wherein the slot (134) is a longitudinal slot, and wherein at least a portion of the longitudinal slot is located in the tapered distal end (136) of the nozzle (110).

5. The system of claim 3, wherein the roller assembly (112) includes a first roller (114) and a second roller (116) configured to move the film (140) in the longitudinal direction.

6. The system of claim 5, wherein at least a portion of the tapered distal end (136) is configured to be located between the first roller (114) and the second roller (116).

## Patentansprüche

1. System zum Aufblasen einer Folie (140) mit zwei Seiten, die einen gemeinsamen Kanal (142) und aufblasbare Kanäle (144) bilden, wobei die aufblasbaren Kanäle (144) mit dem gemeinsamen Kanal (142) in Fließverbindung stehen, wobei das System aufweist:
einen Rollenaufbau (112), der dazu ausgestaltet ist, um die Folie (140) in einer Längsrichtung zu bewegen, und
eine Düse (110), die sich in der Längsrichtung stromaufwärts des Rollenaufbaus (112) befindet und die dazu ausgestaltet ist, um die aufblasbaren Kanäle (144) aufzublasen, wobei die Düse (110) aufweist:
ein proximales Ende (132), das dazu ausgestaltet ist, um die beiden Seiten der Folie (140) voneinander zu trennen, um den gemeinsamen Kanal (142) zu öffnen, während der Film (140) sich in Längsrichtung bewegt,
ein distales Ende (136), das dazu ausgestaltet ist, um zu ermöglichen, dass die beiden Seiten der Folie (140) zusammenlaufen, während die Folie (140) sich in Längsrichtung bewegt, und
einen Schlitz (134), der dazu ausgestaltet ist, Gas in Querrichtung in den gemeinsamen Kanal (142) zu leiten, um die aufblasbaren Kanäle (144) aufzublasen, während sich der Film (140) in Längsrichtung bewegt, **dadurch gekennzeichnet, dass**
die Rollenanordnung (112) eine mit einer Nut versehene Rolle (116) umfasst,
die mit der Nut versehene Rolle (116) dazu ausgestaltet ist, um einen Folienschweißer (118) aufzunehmen, und
der Folienschweißer (118) dazu ausgestaltet ist, eine Siegelung (148) in der Folie (140) zu bilden, während die Folie (140) in Längsrichtung bewegt wird.

2. System nach Anspruch 1, wobei das proximale Ende (132) ein gekrümmtes proximales Ende ist, das dazu ausgestaltet ist, um in Längsrichtung stromaufwärts zu liegen.

3. System nach Anspruch 1, wobei das distale Ende (136) ein sich verjüngendes distales Ende ist, das dazu ausgestaltet ist, um in Längsrichtung stromabwärts zu liegen.

4. System nach Anspruch 3, wobei der Schlitz (134) ein Längsschlitz ist und wobei wenigstens ein Teil des Längsschlitzes in dem sich verjüngenden distalen Ende (136) der Düse (110) liegt.

5. System nach Anspruch 3, wobei der Rollenaufbau (112) eine erste Rolle (114) und eine zweite Rolle (116) umfasst, die dazu ausgestaltet sind, um die Folie (140) in Längsrichtung zu bewegen.

6. System nach Anspruch 5, wobei wenigstens ein Teilbereich des sich verjüngenden distalen Endes (136) dazu ausgestaltet ist, um zwischen der ersten Rolle (114) und der zweiten Rolle (116) positioniert zu werden.

## Revendications

1. Système de gonflage d'un film (140) ayant deux côtés qui forment un canal commun (142) et des canaux gonflables (144), dans lequel les canaux gonflables (144) sont en communication fluidique avec le canal commun (142), le système comprenant :
un ensemble rouleau (112) conçu pour déplacer le film (140) dans une direction longitudinale; et
une buse (110) placée en amont de l'ensemble rouleau (112) dans la direction longitudinale et conçue pour gonfler les canaux gonflables (144), la buse (110) comprenant :
une extrémité proximale (132) conçue pour séparer les deux côtés du film (140) pour ouvrir le canal commun (142) lorsque le film (140) se déplace dans la direction longitudinale ;
une extrémité distale (136) conçue pour permettre aux deux côtés du film (140) de converger lorsque le film (140) se déplace dans la direction longitudinale ; et
une fente (134) conçue pour diriger du gaz transversalement dans le canal commun (142) pour gonfler les canaux gonflables (144) lorsque le film (140) se déplace dans la direction longitudinale ; **caractérisé en ce que**
l'ensemble rouleau (112) inclut un rouleau fendu (116) ;
le rouleau fendu (116) est conçu pour contenir un ruban d'étanchéité (118) ; et
le ruban d'étanchéité (118) est conçu pour former un joint d'étanchéité (148) dans le film (140) lorsque le film (140) est déplacé dans la direction longitudinale.

2. Système selon la revendication 1, dans lequel l'extrémité proximale (132) est une extrémité proximale incurvée conçue pour être agencée en amont dans la direction longitudinale.

3. Système selon la revendication 1, dans lequel l'extrémité distale (136) est une extrémité distale conique conçue pour être agencée en aval dans la direction longitudinale.

4. Système selon la revendication 3, dans lequel la fente (134) est une fente longitudinale, et dans lequel au moins une partie de la fente longitudinale est située dans l'extrémité distale conique (136) de la buse (110).

5. Système selon la revendication 3, dans lequel l'ensemble rouleau (112) inclut un premier rouleau (114) et un second rouleau (116) conçus pour déplacer le film (140) dans la direction longitudinale.

6. Système selon la revendication 5, dans lequel au moins une partie de l'extrémité distale conique (136) est conçue pour être placée entre le premier rouleau (114) et le second rouleau (116).
